(19) Europäisches Patentamt

European Patent Office

Office européen des brevets

(11) **EP 0 965 165 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(21) Anmeldenummer: **98914793.9**

(22) Anmeldetag: **20.02.1998**

(51) Int Cl.⁷: **H02P 5/52**, G05B 19/414

(86) Internationale Anmeldenummer:
**PCT/DE98/00513**

(87) Internationale Veröffentlichungsnummer:
**WO 98/39838 (11.09.1998 Gazette 1998/36)**

(54) **VERFAHREN UND VORRICHTUNG ZUR AUFRECHTERHALTUNG EINES WINKELGENAUEN GLEICHLAUFS EINZELNER VERNETZTER ANTRIEBE EINES DEZENTRALEN ANTRIEBSSYSTEMS**

METHOD AND DEVICE FOR MAINTAINING THE PERFECT SYNCHRONISM OF INDIVIDUAL, NETWORKED DRIVES OF A DECENTRALIZED DRIVE SYSTEM

PROCEDE ET DISPOSITIF POUR MAINTENIR LE PARFAIT SYNCHRONISME D'ELEMENTS D'ENTRAINEMENT INDIVIDUELS EN RESEAU D'UN SYSTEME D'ENTRAINEMENT DECENTRALISE

(84) Benannte Vertragsstaaten:
**AT BE CH DE DK ES FI FR GB IT LI SE**

(30) Priorität: **05.03.1997 DE 19708985**

(43) Veröffentlichungstag der Anmeldung:
**22.12.1999 Patentblatt 1999/51**

(73) Patentinhaber: **SIEMENS AKTIENGESELLSCHAFT**
**80333 München (DE)**

(72) Erfinder: **WEIDAUER, Jens**
**D-91315 Höchstadt (DE)**

(56) Entgegenhaltungen:
**EP-A- 0 156 921       EP-A- 0 466 049**
**EP-A- 0 698 572       DE-A- 4 224 755**
**DE-A- 4 322 991       US-A- 4 878 002**
**US-A- 5 391 970**

• **PATENT ABSTRACTS OF JAPAN vol. 17, no. 521 (E-1435), 20.September 1993 & JP 05 137183 A (TOEI DENKI KK), 1.Juni 1993,**

**Beschreibung**

Verfahren und Vorrichtung zur Aufrechterhaltung eines winkelgenauen Gleichlaufs einzelner vernetzter Antriebe eines dezentralen Antriebssystems

Die Erfindung bezieht sich auf ein Verfahren zur Aufrechterhaltung eines winkelgenauen Gleichlaufs einzelner vernetzter Antriebe eines dezentralen Antriebssystems gemäß Oberbegriff des Anspruchs 1 und auf eine Vorrichtung zur Durchführung des erfindungsgemäßen Verfahrens gemäß Oberbegriff des Anspruchs 3.

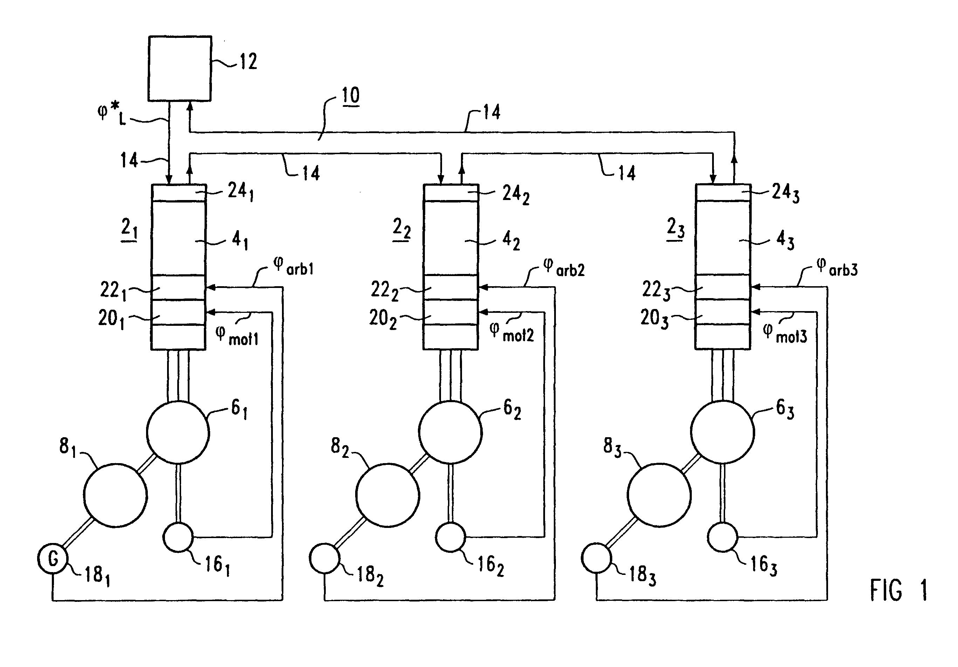

Ein derartiges dezentrales Antriebssystem ist in der Veröffentlichung "Servoantriebe- vom einfachen Steller zum intelligenten Systembaustein" von Dr. Jens Weidauer, abgedruckt in der DE-Zeitschrift "AGT", Heft 4, 1996, Seiten 14 bis 18, vorgestellt. Ein derartiges Antriebssystem ist ebenfalls in der FIG 1 näher dargestellt.

Das in der FIG 1 dargestellte bekannte dezentrale Antriebssystem weist beispielsweise drei digitale intelligente Antriebe $2_1$, $2_2$ und $2_3$ auf, die ihrerseits jeweils einen Umrichter $4_1$, $4_2$ und $4_3$, einen Motor $6_1$, $6_2$ und $6_3$ und eine Arbeitsmaschine $8_1$, $8_2$ und $8_3$ aufweisen. Diese Antriebe $2_1$, $2_2$ und $2_3$ sind mittels eines Bussystems 10 untereinander und mit einem Leitsystem 12 verbunden. Mittels dieses Bussystems 10 können beispielsweise 10 Antriebe $2_1$ bis $2_{10}$ vom Leitsystem 12 betrieben werden, wobei mehrere derartige Bussysteme 10 zusammengeschaltet werden können. Das hier dargestellte Bussystem 10 weist eine Ringstruktur auf, wobei als Übertragungsmedium ein Lichtwellenleiter 14 verwendet wird. Durch den Lichtwellenleiterring als Übertragungsmedium ist eine höchstmögliche Störsicherheit bei gleichzeitig hohen Datenraten gewährleistet. Jedem Motor $6_1$, $6_2$ und $6_3$ und jeder Arbeitsmaschine $8_1$, $8_2$ und $8_3$ ist ein Lagegeber $16_1$, $16_2$ und $16_3$ beziehungsweise $18_1$, $18_2$ und $18_3$, zugeordnet. Jedes Ausgangssignal $\varphi_{mot1,2,3}$ der Lagegeber $16_1$, $16_2$ und $16_3$ und jedes Ausgangssignal $\varphi_{arb1,2,3}$ der Lagegeber $18_1$, $18_2$ und $18_3$ sind einem korrespondierenden Umrichter $4_1$, $4_2$ und $4_3$ zugeführt. Jeder Umrichter $4_1$, $4_2$ und $4_3$ ist mit einer Regeleinrichtung $20_1$, $20_2$ und $20_3$, einer Gleichlaufregeleinrichtung $22_1$, $22_2$ und $22_3$ und einer Busanschaltung $24_1$, $24_2$ und $24_3$ versehen. Eine Ausführungsform einer Regeleinrichtung $20_1$, $20_2$ und $20_3$ ist beispielsweise eine vektorielle Stromregelung mit überlagerter Drehzahländerung die im Bild 4 der eingangs genannten Veröffentlichung dargestellt ist. D.h., der Motor-Lageistwert $\varphi_{mot1,2,3}$ wird jeweils der Regeleinrichtung $20_1$, $20_2$ und $20_3$ und der Maschinen-Lageistwert $\varphi_{arb1,2,3}$ wird jeweils der Gleichlaufregeleinrichtung $22_1$, $22_2$ und $22_3$ zugeführt. Das Leitsystem 12 generiert einen Leit-Sollwert $\varphi_L{}^*$, der mittels der Lichtwellenleiter 14 des Bussystems 10 und den Busschaltungen $24_1$, $24_2$ und $24_3$ den Antrieben $4_1$, $4_2$ und $4_3$ zugeführt wird. Diese Antriebe $2_1$, $2_2$ und $2_3$ regeln nun ihrer Lage entsprechend dem vorgegebenen Leit-Sollwert $\varphi_L{}^*$ selbständig und erhalten so den mechanischen Winkelgleichlauf elektronisch aufrecht.

Bei der Darstellung des dezentralen Antriebssystems mit digitalen intelligenten Antrieben $2_1$, $2_2$ und $2_3$ gemäß Bild 7 der eingangs genannten Veröffentlichung ist das Bussystem 10 in zwei Busse unterteilt, nämlich einen Feldbus für die Übertragung von Parametern sowie Soll- und Istwerten und einen Datenbus für schnelle Datenübertragung zwischen den Antrieben. Als Feldbus wird der Profibus-DP und als Datenbus eine Peer-to-Peer-Verbindung verwendet. Mittels dieser Peer-to-Peer-Verbindung werden Soll- und Istwerte zwischen den einzelnen Antrieben schnell übertragen, ohne dabei ein überlagertes Automatisierungssystem in Anspruch zu nehmen. Diese Funktionalität ist besonders dann von Vorteil, wenn Technologiefunktionen, wie z.B. Gleichlauf- und Positionierregelungen, aus der zentralen Leitebene in die Antriebe verlagert werden.

Im Aufsatz "Digitale Antriebe und SERCOS-interface" von Werner Philipp, abgedruckt in der DE-Zeitschrift "Antriebstechnik", Band 31 (1992), Nr. 12, Seiten 30 bis 38, wird das serielle Echtzeit-Kommunikationssystem SERCOS-interface vorstellt. Zu dem werden in diesem Aufsatz mehrere digitale Antriebssysteme vorgestellt, deren Antriebe und ein Leitsystem mittels diesem SERCOS-interface vernetzt sind (Bilder 3, 4, 6 und 8). Durch dieses Echtzeit-Kommunikationssystem verfügen die Antriebe über Funktionen wie elektronisches Getriebe und elektronische Kurvenscheibe. Mittels SERCOS interface wird bei einem CNC-gesteuerten Antriebssystem eine vollkommene Synchronisation von Istwerterfassung, Sollwertverarbeitung, Regelung und Pulsweitenmodulation aller Achsen erreicht.

In dem Aufsatz "Dezentral bringt mehr" von Jens Thielmann, abgedruckt in der Siemens-Zeitschrift "drive & control" Nr. 1/96, Seiten 4 bis 6, wir das dezentrale Arbeitskonzept am Beispiel einer Form-, Füll- und Verschließmaschine für Becher vorgestellt. Bei diesem Antriebssystem sind die Umrichter mit verschiedenen Regelungsmodulen, mit einem Technologiemodul und einem Kommunikationsmodul, ausgestattet. Das verwendete Bussystem ist in ein Feldbussystem (Profibus-DP) und ein Datenbussystem (Peer-to-Peer) unterteilt.

Bei diesen vorgestellten dezentralen Antriebssystemen kann es vorkommen, daß das Bussystem gestört wird oder sogar ausfällt. Diese Störung bzw. der Ausfall des Bussystems führt im allgemeinen zum Stillsetzen der Maschine. Während des Stillsetzvorganges muß der Winkelgleichlauf der einzelnen Antriebe bzw. Achsen jedoch so weit gewahrt werden, daß die mechanische Zerstörung einzelner Maschinenteile ausgeschlossen ist.

Diese Funktion ist bei einer Struktur entsprechend dem Blockschaltbild gemäß FIG 1 nicht gegeben. Bei Ausfall des Bussystems 10 werden die Antriebe $2_1$, $2_2$, und $2_3$ nicht mehr mit den notwendigen Sollwerten versorgt und jeder Antrieb $2_1$, $2_2$, und $2_3$ setzt sich unabhängig von den Nachbarantrieben still. Der Winkelgleichlauf geht dabei verloren und mechanische Beschädigungen der Arbeitsmaschine sind nicht auszuschließen.

Der Erfindung liegt nun die Aufgabe zugrunde, ein Verfahren zur Aufrechterhaltung eines winkelgenauen Gleichlaufes einzelner vernetzter Antriebe eines dezentralen Antriebssystems beim Ausfall seines Bussystems anzugehen.

Diese Aufgabe wird erfindungsgemäß mit Merkmalen des Anspruchs 1 gelöst.

Dadurch, daß jeder Antrieb mit dem Maschinen-Lageistwert seines technologischen vorgelagerten Antriebes versorgt wird und anstelle seines eigenen Maschinen-Lageistwertes seinen Motor-Lageistwert verwenden kann, stehen auch bei Ausfall des Bussystems alle Signale zur Verfügung, um einen Gleichlauf zwischen den Antrieben aufrechtzuerhalten.

Bei einem vorteilhaften Verfahren wird der eigene Motor-Lageistwert vor der Verwendung als Lage-Istwert der Lageregelung auf einen korrespondierenden Maschinen-Lageistwert umgerechnet. Dadurch wird die Genauigkeit des erfindungsgemäßen Verfahrens weiter verbessert.

Zur weiteren Erläuterung der Erfindung wird auf die Zeichnung Bezug genommen, in der ein Ausführungsbeispiel der Vorrichtung zur Durchführung des erfindungsgemäßen Verfahrens schematisch veranschaulicht ist.

FIG 1 zeigt ein bekanntes dezentrales Antriebssystem mit mehreren digitalen intelligenten Antrieben, in der

FIG 2 ist ein erfindungsgemäßes dezentrales Antriebssystem mit mehreren digitalen intelligenten Antrieben dargestellt, wobei in der

FIG 3 eine Vorrichtung zur Durchführung des erfindungsgemäßen Verfahrens veranschaulicht ist.

Bei den Darstellungen der FIG 1 bis 3 werden gleiche Bauelemente mit denselben Bezugszeichen versehen.

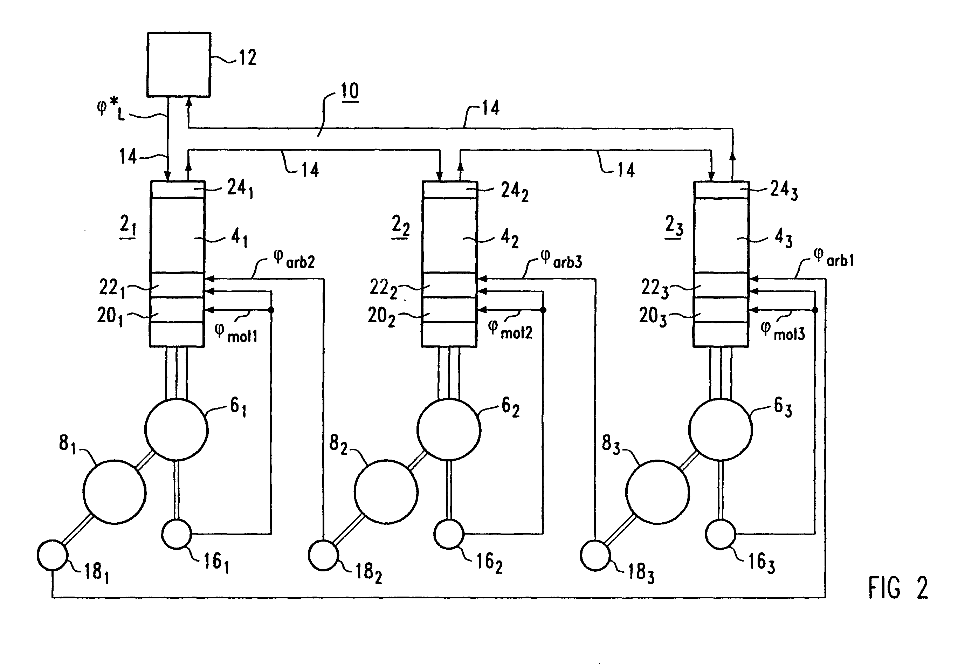

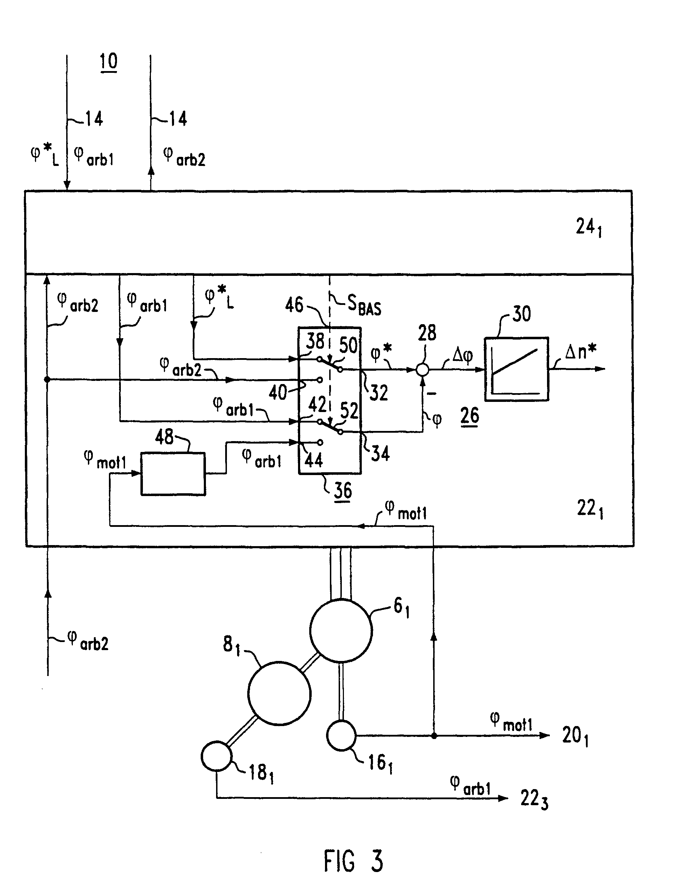

Das dezentrale Antriebssystem gemäß FIG 2 unterscheidet sich vom bekannten dezentralen Antriebssystem gemäß FIG 1 dadurch, daß der maschinenseitige Lagegeber $18_1$, $18_2$ und $18_3$ eines jeden Antriebs $2_1$, $2_2$ und $2_3$ ausgangsseitig nicht mehr mit dem Umrichter $4_1$, $4_2$ und $4_3$ des korrespondierenden Antriebs $2_1$, $2_2$ und $2_3$ verbunden ist, sondern mit dem Umrichter $4_3$, $4_2$ und $4_1$ des technologisch folgenden Antriebs $2_3$, $2_2$ und $2_1$ verbunden ist. D.h., jeder Maschinen-Lageistwert $\varphi_{arb1}$, $\varphi_{arb2}$ und $\varphi_{arb3}$ wird einer Gleichlaufregeleinrichtung $22_3$, $22_1$ und $22_2$ eines technologisch folgenden Antriebs $2_3$, $2_2$ und $2_1$ zugeführt. Ein Ausführungsbeispiel einer erfindungsgemäßen Gleichlaufregeleinrichtung $22_1$ ist in der FIG 3 näher dargestellt.

Gemäß FIG 3 weist die Gleichlaufregeleinrichtung $22_1$ einen Lageregelkreis 26 auf, der aus einem Vergleich 28 und einem Lageregler 30 besteht. Dieser Lageregler 30 ist dem Vergleich 28 nachgeschaltet, so daß eine ermittelte Lagedifferenz $\Delta\varphi$ ausgeregelt werden kann. Am Ausgang des Lagereglers 30 steht eine Änderung $\Delta n^*$ des Drehzahl-Sollwertes $n^*$ für die unterlagerte Drehzahlregelung, die nicht näher dargestellt ist, an. Am nichtinvertierenden Eingang des Vergleichers 28 steht ein Lage-Sollwert $\varphi^*$ und an seinem invertierenden Eingang ein Lage-Istwert $\varphi$ an. Eingangsseitig ist dieser Lageregelkreis 26 mit den Ausgängen 32 und 34 einer Umschalteinrichtung 36 verbunden, die eingangsseitig vier Eingänge 38, 40, 42 und 44 und einen Betätigungseingang 46 aufweist. Der Betätigungseingang 46 wird mittels eines Busausfall-Signals $S_{BAS}$ gesteuert, wobei dieses Busausfall-Signal $S_{BAS}$ von der Busanschaltung $24_1$ generiert wird, sobald das Bussystem 10 gestört oder ausgefallen ist. Die Eingänge 38 und 42 der Umschalteinrichtung 36 sind für den ungestörten Betrieb und die Eingänge 40 und 44 für den gestörten Betrieb des dezentralen Antriebssystems vorgesehen. Die Eingänge 38 und 42 der Umschalteinrichtung 36 sind mit der Busanschaltung $24_1$ verknüpft, die den Leit-Sollwert $\varphi^*_L$ und den Maschinen-Lageistwert $\varphi_{arb1}$ der zugehörigen Arbeitsmaschine $18_1$ dem Bussystem 10 entnimmt. Dabei wird der Leit-Sollwert $\varphi^*_L$ als Lage-Sollwert $\varphi^*$ und der Maschinen-Lageistwert $\varphi_{arb1}$ als Lage-Istwert $\varphi$ des Lageregelkreises 26 verwendet.

Die Eingänge 40 und 44 der Umschalteinrichtung 36 sind jeweils mit einem Eingang der Gleichlaufregeleinrichtung $22_1$ verbunden, an denen der Maschinen-Lageistwert $\varphi_{arb2}$ des technologisch vorgelagerten Antriebs $2_2$ und der Motor-Lageistwert $\varphi_{mot1}$ des zugehörigen Antriebs $2_1$ anstehen. Der Maschinen-Lageistwert $\varphi_{arb2}$ wird einerseits dem Eingang 40 der Umschalteinrichtung 36 und einem Eingang der Busanschaltung $24_1$ zugeführt. Mittels dieser Busanschaltung $24_1$ gelangt dieser Maschinen-Lageistwert $\varphi_{arb2}$ über das Bussystem 10 zur Busanschaltung $24_2$ des technologisch vorgelagerten Antriebs $2_2$. Der Motor-Lageistwert $\varphi_{mot1}$ wird über eine Anpaßschaltung 48 dem Eingang 44 der Umschalteinrichtung 36 zugeführt.

Die Umschalteinrichtung 36 weist beispielsweise zwei Schalter 50 und 52 auf, die den Eingang 38 oder 40 mit dem Ausgang 32 der Umschalteinrichtung 36 bzw. den Eingang 42 oder 44 mit dem Ausgang 34 der Umschalteinrichtung 36 verbindet. Mittels dieser beiden Schalter 50 und 52 kann in Abhängigkeit des Busausfall-Signals $S_{BAS}$ zwischen zwei Sollwerten $\varphi^*_L$ und $\varphi_{arb2}$ und zwischen Istwerten $\varphi_{arb1}$ und $\varphi_{mot1}$ umgeschaltet werden.

Mit Hilfe der Anpaßschaltung 48 wird der ermittelte Motor-Lageistwert $\varphi_{mot1}$ auf einen korrespondierenden Maschinen-Lageistwert $\varphi_{arb1}$ umgerechnet. Dazu ist die Anpaßschaltung 48 mit einem Übersetzungsverhältnis versehen, der das Verhältnis zwischen Motorlage und Maschinenlage wiedergibt.

Somit wird im ungestörten und gestörten Betrieb des dezentralen Antriebssystems jeweils der Ma-

schinen-Lageistwert $\varphi_{arb1,2,3}$ als Lage-Istwert $\varphi$ des Lageregelkreises 26 verwendet. Der Unterschied besteht jedoch darin, daß im ungestörten Betrieb der Maschinen-Lageistwert $\varphi_{arb1}$ über das Bussystem 10 vom technologisch vorgelagerten Antrieb $2_3$ geliefert wird und daß im gestörten Betrieb dieser Maschinen-Lageistwert $\varphi_{arb1}$ aus dem ermittelten Motor-Lageistwert $\varphi_{mot1}$ abgeleitet wird. Die Signale für den Lage-Sollwert $\varphi^*$ des Lageregelkreises 26 sind im ungestörten Betrieb nach dem erfindungsgemäßen Verfahren unterschiedlich. Im ungestörten Betrieb wird der vom Leitsystem 12 generierte Leit-Sollwert $\varphi_L^*$ als Lage-Sollwert $\varphi^*$ des Lageregelkreises 26 verwendet, wogegen im gestörten Betrieb der Maschinen-Lageistwert $\varphi_{arb2}$ des technologisch vorgelagerten Antriebs $2_2$ als Lage-Sollwert $\varphi^*$ verwendet wird.

Dadurch kennt jeder Antrieb $2_1$, $2_2$, und $2_3$ des dezentralen Antriebssystems beim Ausfall des Bussystems 10 die augenblickliche Maschinenlage $\varphi_{arb1,2,3}$ des technologisch vorgelagerten Antriebs $2_2$, $2_3$ und $2_1$ und seine eigene augenblickliche Lage $\varphi_{mot1,2,3}$, so daß jeder Antrieb $2_1$, $2_2$ und $2_3$ mit seiner Gleichlaufregeleinrichtung $22_1$, $22_2$ und $22_3$ dem winkelgenauen Gleichlauf mit dem technologisch vorgelagerten Antrieb $2_2$, $2_3$ und $2_1$ aufrecht erhalten kann. Somit ist ein zerstörungsfreies Stillsetzen des dezentralen Antriebssystems möglich.

## Patentansprüche

1. Verfahren zur Aufrechterhaltung eines winkelgenauen Gleichlaufs einzelner vernetzter Antriebe ($2_1$, $2_2$, $2_3$) eines dezentralen Antriebssystems, dessen Antriebe ($2_1$, $2_2$, $2_3$) jeweils mittels eines Bussystems (10) untereinander und mit einem Leitsystem (12) verbunden sind und jeweils einen umrichtergespeisten Motor ($6_1$, $6_2$, $6_3$) mit zugehöriger Arbeitsmaschine ($8_1$, $8_2$, $8_3$), die jeweils mit einem Lagegeber ($16_1$, $16_2$, $16_3$, ; $18_1$, $18_2$, $18_3$) versehen sind, aufweisen, wobei das Leitsystem (12) einen Leit-Sollwert ($\varphi_g^*$) generiert und mittels des Bussystems (10) den vernetzten Antrieben ($2_1$, $2_2$, $2_3$) zuführt,
**dadurch gekennzeichnet,**
**daß** beim Ausfall dieses Bussystems (10) zum winkelgenauen Gleichlauf jedes Antriebs ($2_1$, $2_2$, $2_3$) zu einem benachbarten Antrieb ($2_2$, $2_3$, $2_1$) des dezentralen Antriebssystems jeweils als Lage-Sollwert ($\varphi^*$) anstelle eines vorbestimmten Lagesollwertes ($\varphi_L^*$) ein Maschinen-Lageistwert ($\varphi_{arb2}$, $\varphi_{arb3}$, $\varphi_{arb1}$) eines technologisch vorgelagerten Antriebs ($2_2$, $2_3$, $2_1$) und jeweils als Lage-Istwert ($\varphi$) anstelle seines Maschinen-Lageistwertes ($\varphi_{arb1}$, $\varphi_{arb2}$, $\varphi_{arb3}$) sein Motor-Lageistwert ($\varphi_{mot1}$, $\varphi_{mot2}$, $\varphi_{mot3}$) verwendet wird.

2. Verfahren nach Anspruch 1, wobei der Motor-Lageistwert ($\varphi_{mot}$) in einem korrespondierenden Maschinen-Lageistwert ($\varphi_{arb}$) umgerechnet wird.

3. Vorrichtung zur Durchführung des Verfahrens zur Aufrechterhaltung eines winkelgenauen Gleichlaufs einzelner vernetzter Antriebe ($2_1$, $2_2$, $2_3$) eines dezentralen Antriebssystems nach Anspruch 1, wobei die Umrichter ($4_1$, $4_2$, $4_3$) jeweils mit einer einen Vergleicher (28) mit nachgeschaltetem Lageregler (30) aufweisenden Gleichlaufregeleinrichtung ($22_1$, $22_2$, $22_3$) und mit einer Busanschaltung ($24_1$, $24_2$, $24_3$) versehen sind,
**dadurch gekennzeichnet,**
**daß** die Gleichlaufregeleinrichtung ($22_1$, $22_2$, $22_3$) eine Umschalteinrichtung (36) aufweist, deren beiden Ausgänge (32,34) mit den Eingängen des Vergleichers (28), deren beiden ersten Eingänge (38,42) und dessen Betätigungseingang (46) mit der Busanschaltung ($24_1$, $24_2$, $24_3$) und deren beiden zweiten Eingängen (40,44), jeweils mit einem Eingang der Gleichlaufregeleinrichtung ($22_1$, $22_2$, $22_3$), an denen ein Maschinenund ein Motor-Lageistwert ($\varphi_{arb2}$, $\varphi_{arb3}$, $\varphi_{arb1}$; $\varphi_{mot1}$, $\varphi_{mot2}$, $\varphi_{mot3}$) anstehen, verknüpft sind und daß der Eingang der Gleichlaufregeleinrichtung ($22_1$, $22_2$, $22_3$), an dem ein Maschinen-Lageistwert ($\varphi_{arb1}$, $\varphi_{arb2}$, $\varphi_{arb3}$) ansteht, mit der Busanschaltung ($24_1$, $24_2$, $24_3$) verknüpft ist.

4. Vorrichtung nach Anspruch 3,
**dadurch gekennzeichnet,**
**daß** dem Eingang, an dem ein Motor-Lageistwert ($\varphi_{mot}$) ansteht, eine Anpaßschaltung (48) nachgeschaltet ist, die ausgangsseitig mit einem zweiten Eingang (44) der Umschalteinrichtung (36) verknüpft ist.

5. Vorrichtung nach Anspruch 3,
**dadurch gekennzeichnet,**
**daß** die Umschalteinrichtung (36) zwei Umschalter (50,52) aufweist, die gleichzeitig betätigt werden.

6. Vorrichtung nach Anspruch 3,
**dadurch gekennzeichnet,**
**daß** als Bussystem (10) ein Echtzeit-Kommunikationssystem vorgesehen ist.

7. Vorrichtung nach Anspruch 6,
**dadurch gekennzeichnet,**
**daß** als Echtzeit-Kommunikationssystem das SERCOS-interface verwendet wird.

## Claims

1. Method for maintaining the perfect synchronism of individual networked drives ($2_1$, $2_2$, $2_3$) of a decentralised drive system whose drives ($2_1$, $2_2$, $2_3$) are

connected to one another and to a control system (12) by means of a bus system (10) and each have a converter-fed motor ($6_1$, $6_2$, $6_3$) with an associated driven machine ($8_1$, $8_2$, $8_3$) which are each provided with a position sensor ($16_1$, $16_2$, $16_3$; $18_1$, $18_2$, $18_3$), where the control system (12) generates a reference setpoint value ($\varphi_L^*$) and feeds this to the networked drives ($2_1$, $2_2$, $2_3$) by means of the bus system (10),
**characterised in that**
on failure of this bus system (10), in order to ensure perfect synchronism of each drive ($2_1$, $2_2$, $2_3$) with an adjacent drive ($2_2$, $2_3$, $2_1$) of the decentralised drive system, in each case a machine position value ($\varphi_{arb2}$, $\varphi_{arb3}$, $\varphi_{arb1}$) from a drive ($2_2$, $2_3$, $2_1$) upstream in the process is used as the position setpoint ($\varphi^*$) instead of a predefined reference setpoint value ($\varphi_L^*$), and in each case its motor position value ($\varphi_{mot1}$, $\varphi_{mot2}$, $\varphi_{mot3}$) is used as the position value ($\varphi$) instead of its machine position value ($\varphi_{arb1}$, $\varphi_{arb2}$, $\varphi_{arb3}$).

2. Method in accordance with Claim 1, in which the motor position value ($\varphi_{mot}$) is converted into a corresponding machine position value ($\varphi_{arb}$).

3. Device for implementing the method for maintaining the perfect synchronism of individual networked drives ($2_1$, $2_2$, $2_3$) of a decentralised drive system in accordance with Claim 1, where the converters ($4_1$, $4_2$, $4_3$) are each provided with a synchronisation control device ($22_1$, $22_2$, $22_3$), having a comparator (28) with a downstream-connected position controller (30), and with a bus interface ($24_1$, $24_2$, $24_3$),
**characterised in that**
the synchronisation control device ($22_1$, $22_2$, $22_3$) has a changeover device (36) whose two outputs (32, 34) are linked to the inputs of the comparator (28), whose two first inputs (38, 42) and whose actuation input (46) are linked to the bus interface ($24_1$, $24_2$, $24_3$), and whose two second inputs (40, 44) are linked in each case to an input of the synchronisation control device ($22_1$, $22_2$, $22_3$), with a machine position value and a motor position value ($\varphi_{arb2}$, $\varphi_{arb3}$, $\varphi_{arb1}$; $\varphi_{mot1}$, $\varphi_{mot2}$, $\varphi_{mot3}$) being applied to the inputs, and that the input of the synchronisation control device ($22_1$, $22_2$, $22_3$), to which a machine position value ($\varphi_{arb1}$, $\varphi_{arb2}$, $\varphi_{arb3}$) is applied, is linked to the bus interface ($24_1$, $24_2$, $24_3$).

4. Device in accordance with Claim 3,
**characterised in that**
a matching circuit (48) is connected downstream of the input to which a motor position value ($\varphi_{mot}$) is applied, and is linked on the output side to a second input (44) of the changeover device (36).

5. Device in accordance with Claim 3,

**characterised in that**
the changeover device (36) has two changeover switches (50, 52) which are actuated simultaneously.

6. Device in accordance with Claim 3,
**characterised in that**
a real-time communication system is provided as the bus system (10).

7. Device in accordance with Claim 6,
**characterised in that**
the SERCOS-interface is used as a real-time communication system.

## Revendications

1. Procédé pour maintenir un synchronisme parfait d'éléments d'entraînement individuels en réseau ($2_1$, $2_2$, $2_3$) d'un système d'entraînement décentralisé dont les éléments d'entraînement ($2_1$, $2_2$, $2_3$) sont reliés à chaque fois au moyen d'un système de bus (10) entre eux et à un système de commande (12) et comportent à chaque fois un moteur ($6_1$, $6_2$, $6_3$) alimenté par convertisseur et comportant une machine productrice à travail associée ($8_1$, $8_2$, $8_3$), lesquels moteurs et machines sont munis chacun d'un transmetteur de position ($16_1$, $16_2$, $16_3$ ; $18_1$, $18_2$, $18_3$), le système de commande (12) produisant une valeur de consigne de commande ($\varphi_L^*$) et l'envoyant au moyen du système de bus (10) aux éléments d'entraînement en réseau ($2_1$, $2_2$, $2_3$),
**caractérisé par** le fait que, en cas de panne de ce système de bus (10), en vue d'un synchronisme parfait de chaque élément d'entraînement ($2_1$, $2_2$, $2_3$) par rapport à un élément d'entraînement voisin ($2_2$, $2_3$, $2_1$) du système d'entraînement décentralisé, on utilise à chaque fois comme valeur de consigne de position ($\varphi^*$) à la place d'une valeur de consigne de position prédéterminée ($\varphi_L^*$) une valeur réelle de position de machine ($\varphi_{arb2}$, $\varphi_{arb3}$, $\varphi_{arb1}$) d'un élément d'entraînement ($2_2$, $2_3$, $2_1$) technologiquement du côté amont et à chaque fois comme valeur réelle de position ($\varphi$) à la place de sa valeur réelle de position de machine $\varphi_{arb1}$, $\varphi_{arb2}$, $\varphi_{arb3}$) sa valeur réelle de position de moteur $\varphi_{mot1}$, $\varphi_{mot2}$, $\varphi_{mot3}$).

2. Procédé selon la revendication 1, dans lequel on convertit la valeur réelle de position de moteur ($\varphi_{mot}$) en une valeur réelle de position de machine correspondante ($\varphi_{arb}$).

3. Dispositif pour la mise en oeuvre du procédé pour maintenir un synchronisme parfait d'éléments d'entraînement individuels en réseau ($2_1$, $2_2$, $2_3$) d'un système d'entraînement décentralisé selon la revendication 1, dans lequel les convertisseurs ($4_1$, $4_2$, $4_3$) sont munis chacun d'un dispositif de réglage de synchronisme ($22_1$, $22_2$, $22_3$), comportant un comparateur (28) avec un régulateur de position (30) branché du côté aval, et d'une connexion de bus ($24_1$, $24_2$, $24_3$),

**caractérisé par** le fait que le dispositif de réglage de synchronisme ($22_1$, $22_2$, $22_3$) comporte un dispositif commutateur (36) dont les deux sorties (32, 34) sont reliées aux entrées du comparateur (28), dont les deux premières entrées (38, 42) et dont l'entrée d'activation (46) sont reliées à la connexion de bus ($24_1$, $24_2$, $24_3$) et dont les deux deuxièmes entrées (40, 44) sont reliées chacune à une entrée du dispositif de réglage de synchronisme ($22_1$, $22_2$, $22_3$), entrées auxquelles se trouvent une valeur réelle de position de machine ($\varphi_{arb2}$, $\varphi_{arb3}$, $\varphi_{arb1}$) et une valeur réelle de position de moteur ($\varphi_{mot1}$, $\varphi_{mot2}$, $\varphi_{mot3}$) et que l'entrée du dispositif de réglage de synchronisme ($22_1$, $22_2$, $22_3$) à laquelle se trouve une valeur réelle de position de machine ($\varphi_{arb1}$, $\varphi_{arb2}$, $\varphi_{arb3}$) est reliée à la connexion de bus ($24_1$, $24_2$, $24_3$).

4. Dispositif selon la revendication 3,

**caractérisé par** le fait qu'il est branché du côté aval de l'entrée, à laquelle se trouve une valeur réelle de position de moteur ($\varphi_{mot}$), un circuit d'adaptation (48) qui est relié côté sortie à une deuxième entrée (44) du dispositif commutateur (36).

5. Dispositif selon la revendication 3,

**caractérisé par** le fait que le dispositif commutateur (36) comporte deux commutateurs (50, 52) qui sont actionnés en même temps.

6. Dispositif selon la revendication 3,

**caractérisé par** le fait qu'il est prévu comme système de bus (10) un système de communication en temps réel.

7. Dispositif selon la revendication 6,

**caractérisé par** le fait qu'il est utilisé comme système de communication en temps réel le système SERCOS-interface.

FIG 1

FIG 2

EP 0 965 165 B1

FIG 3